(19) Europäisches Patentamt
European Patent Office
Office européen des brevets

(11) **EP 0 762 590 B1**

(12) **EUROPÄISCHE PATENTSCHRIFT**

(45) Veröffentlichungstag und Bekanntmachung des Hinweises auf die Patenterteilung:
**27.10.1999 Patentblatt 1999/43**

(51) Int Cl.6: **H02H 3/00**

(21) Anmeldenummer: **96113854.2**

(22) Anmeldetag: **29.08.1996**

(54) **Leitungsschutzschalter**

Line circuit breaker

Disjoncteur de ligne

(84) Benannte Vertragsstaaten:
**DE FR GB**

(30) Priorität: **31.08.1995 DE 19532198**

(43) Veröffentlichungstag der Anmeldung:
**12.03.1997 Patentblatt 1997/11**

(73) Patentinhaber: **SIEMENS AKTIENGESELLSCHAFT**
**80333 München (DE)**

(72) Erfinder: **Maier, Reinhard, Dr.**
**91074 Herzogenaurach (DE)**

(56) Entgegenhaltungen:
**DE-A- 4 000 627**    **US-A- 5 012 168**
**US-A- 5 245 496**

EP 0 762 590 B1

**Beschreibung**

Die Erfindung bezieht sich auf einen Leitungsschutzschalter zum Überlastschutz von Leitungen in Abhängigkeit von vorgegebenen Schaltkriterien, wobei zum Einstellen der Schaltkriterien eine informationsverarbeitende Einheit, insbesondere ein Mikroprozessor oder ein Mikrocontroller, vorhanden ist, wobei die informationsverarbeitende Einheit einen adaptiven Überlastbaustein derart bildet, daß die Schaltkriterien bei eingebautem Schalter veränderbar sind.

Die DE 31 14 546 C2 beschreibt einen Leitungsschutzschalter zum Überlastschutz von Leitungen in Abhängigkeit von vorgegebenen Schaltkriterien, wobei zum Einstellen der Schaltkriterien eine informationsverarbeitende Einheit, insbesondere ein Mikroprozessor oder ein Mikrocontroller, vorhanden ist. Die Ausbildung der informationsverarbeitenden Einheit als adaptiver Überlastbaustein derart, daß die Schaltkriterien bei eingebautem Schalter veränderbar sind, ist aus der DE 40 00 627 Al zur Anwendung speziell für einen Leistungsschalter bekannt.

Aus der DE-3738795 ist ein Überstromschutzschalter mit einem Thermobimetallauslöser bekannt.

Üblicherweise besitzen mechanische Leitungsschutzschalter (LS) keine Einstellmöglichkeiten, mit denen sie nach der Installation auf die zu schützende Leitung mit deren unterschiedlichem Installationsmaterial und/oder Verlegeart eingestellt werden können. Allerdings werden Leitungsschutzschalter durch die Umgebungstemperatur des Verteilerschrankes und/oder durch zusätzliche Temperaturbeeinflussungen der benachbarten Leitungsschutzschalter gestört bzw. kann dadurch das Auslöseverhalten beeinflußt werden.

Letzteres führt dazu, daß bei extremen, aber noch von den Bestimmungen zulässigen Bedingungen entweder der Leitungsschutzschalter zu früh auslöst und damit die Übertragungskapazität der Leitung bei weitem nicht ausgenutzt wird oder aber daß der Leitungsschutzschalter die Leitung überhaupt nicht mehr schützen kann.

Bisher bemüht man sich, durch eine spezielle Anordnung der einzelnen Leitungsschutzschalter im Verteilerschrank die gegenseitige Beeinflussung zu minimieren. Durch sorgfältige Abstimmung der Leitungsschutzschalter und der Leitungsquerschnitte können die Probleme gemildert werden. Nachteilig ist dabei, daß schon bei der Projektierung einer energietechnischen Anlage die verschiedenen Typen von Leitunsschutzschaltern und Leitungen ausgewählt werden müssen.

Aufgabe der Erfindung ist es, hier Abhilfe zu schaffen.

Die Aufgabe ist erfindungsgemäß dadurch gelöst, daß die informationsverarbeitende Einheit einen adaptiven Überlastbaustein derart bildet, daß die Schaltkriterien bei eingebautem Schalter veränderbar sind und wenigstens das Isolationsmaterial sowie die Verlegeart einerseits und die Raumtemperatur andererseits berücksichtigen.

Mit der Erfindung ist ein sogenannter intelligenter Leitungsschutzschalter geschaffen. Da die informationsverarbeitende Einheit, namlich der Mikroprozessor oder der Mikrocontroller, als adaptiver Überlastbaustein realisiert werden kann, ist der einzelne Leitungsschutzschalter von der Umgebungstemperatur des Verteilerkastens und der zusätzlichen Erwärmung durch die benachbarten Leitungsschutzschalter in seinem Auslöseverhalten unabhängig.

Insbesondere das Leitungsisolationsmaterial und die Verlegeart konnen über gespeicherte Parametersätze über Codierschalter oder ähnliches berücksichtigt werden. Der Einfluß der Raumtemperatur auf die Überlastfähigkeit der zu schützenden Leitung kann beispielsweise durch einen Temperaturfühler dem einzelnen Leitungsschutzschalter übermittelt und dort berücksichtigt.

Es ist möglich, daß der intelligente Leistungsschutzschalter in ein Gebäudeinstallations-Bussystem, beispielsweise EIB, integriert wird, da ein solches System insbesondere einen geeigneten Temperaturfühler für die Raumtemperatur bereits enthält.

Weitere Einzelheiten und Vorteile der Erfindung ergeben sich aus der nachfolgenden Figurenbeschreibung eines Ausführungsbeispiels anhand der Zeichnung. Es zeigen

Figur 1      das Blockschaltbild eines adaptiven, intelligenten Leitungsschutzschalters und
Figur 2      ein vereinfachtes Modell einer Leitung zur Verdeutlichung des Einmeßvorganges.

Die Merkmale eines Leitungsschutzschalters konventioneller Art - wie Nennstrom (Kurzschlußstrom) und Auslösecharakteristik, z.B. die gemäß Norm üblicherweise festgelegten Charakteristiken B und C sind durch die elektromechanische Konstruktion des Schalters gegeben. Problematisch ist die Abstimmung auf den Verbraucher, das Leiter- und Isolationsmaterial der Leitung, die Umgebungstemperatur, die Wärmeabfuhr, d.h. die Verlegeart sowie der zusätzliche Einfluß der Umgebungstemperatur, die durch Nachbar-Leitungsschutzschalter zusätzlich erhöht werden kann.

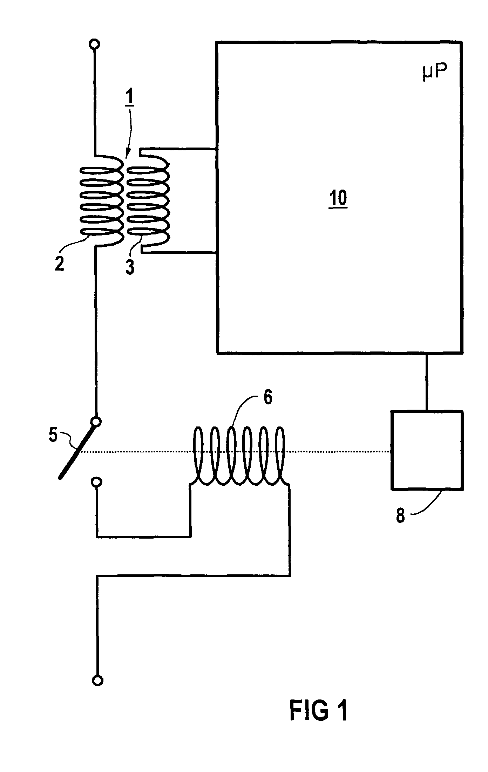

In Figur 1 ist mit 1 ein Stromwandler bezeichnet, der aus einer Primärwicklung im Leitungskreis und einer Sekundärwicklung besteht, die transformatorisch miteinander gekoppelt sind. Mit 5 ist ein Schalter bezeichnet, dem eine Kurzschluß-Auslösespule 6 zugeordnet ist. Der Schalter 5 wird entweder von der Auslösespule 6 oder einem sogenannten Aktor 8 aktiviert.

Der so beschriebenen Anordnung ist ein Mikroprozessor 10 zugeordnet, der als adaptiver Überlastbaustein fungiert. Der Mikroprozessor 10 erhält als Eingangssignal ein stromproportionales Signal von der Sekundärwicklung 2 des Stromwandlers 1 und liefert ein Ausgangssignal an den Aktor 8.

Der adaptive Überlastbaustein als Teil des intelligenten Leitungsschutzschalters stellt die Betriebsbedingungen so ein, daß sie optimal auf den Verbraucher, das Leiter- und das Isolationsmaterial und die Wärmeabfuhr eingestellt ist und nicht durch die Umgebungstemperatur und den Nachbar-Leitungsschutzschalter beeinflußt wird.

Mit der beschriebenen Anordnung ist eine Anpassung an den Verbraucher in optimaler Weise möglich. Eine solche Anpassung besteht insbesondere im sogenannten Einmessen an den Verbraucher.

Zur Anpassung an den Verbraucher ist eine manuelle Voreinstellung der Verbraucherklasse, wie beispielsweise Halbleiter, Glühlampe, Motor, ohm'scher Widerstand, zweckmäßig sowie eine daran sich anschließende automatische adaptive Anpassung der Charakteristik und der Kennlinien. Es ist auch eine automatische Anpassung an die Verbraucherklasse möglich, indem bei der Inbetriebnahme das Gerät von einem nicht gestörten Zutand ausgeht. Beispielsweise bei einem Motor werden dafür mehrere Anlaufvorgänge durchgeführt, so daß das Gerät die Charakteristik erlernt und sich eine Auslösekennlinie abspeichern läßt. Dadurch läßt sich die Typenvielfalt drastisch reduzieren. Sofern ein an den Nennstrom justierbarer Stromwandler verwendet wird, muß dann nur das eigentliche Schaltelement für den jeweiligen Nennstrom vorgesehen werden.

Bei gegebenem Strom ist die Temperatur $\vartheta$ einer Leitung eine Funktion des Leitermaterials, der Umgebungstemperatur und der Wärmeabfuhr, wobei letztere durch die Verlegeart gekennzeichnet ist. Für die unterschiedlichen Verlegearten sind für einen bestimmten Querschnitt in DIN VDE 0100 Teil 430 direkt Stromwerte angegeben. Die maximal zulässige Leitungstemperatur $\vartheta_{Max}$ ist dann durch die verwendete Isolierung, beispielsweise PVC oder VPE, gegeben.

Wenn eine Installation neu in Betrieb genommen wird, ist üblicherweise das verwendete Leiter- und Isolationsmaterial vorgegeben. Da die Leitung jedoch durch Zonen mit unterschiedlicher Verlegeart, d.h. Wärmeabfuhr, geführt sein kann und die Zone mit der geringsten Wärmeabfuhr den zulässigen Strom in der gesamten Leitung bestimmt, ist die Verlegeart der Zone mit der geringsten Wärmeabfuhr zu bestimmen. Dies erfolgt durch das sogenannte Einmessen während der Inbetriebnahme, so daß die Verlegeart optimal bestimmt und damit sowohl eine Überlastung sowie eine Minderausnutzung vermieden werden kann.

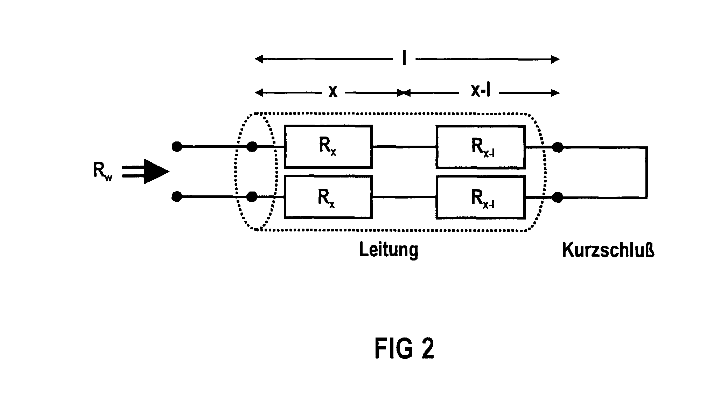

Das Einmessen ist ein genormter Vorgang, bei dem entsprechend Figur 2 eine Leitung 20 mit der Gesamtlänge 1 in zwei Zonen unterschiedlicher Wärmeabfuhr aufgeteilt wird. Dabei hat eine Zone mit der bekannten Länge x eine sehr schlechte Wärmeabfuhr und weist damit eine hohe Temperatur $\vartheta_x$ auf, während die restliche Leitung mit der Länge (1-x) eine sehr gute Wärmeabfuhr hat und sich dadurch an die Umgebungstemperatur angleicht.

Zur Prüfung wird das Leitungsende kurzgeschlossen und der Leitungswiderstand der kalten Leitung $R_K$ gemessen. Anschließend wird die Leitung 20 durch einen Strom IM bei gleichzeitiger Messung des Spannungsabfalls am Leitungsanfang solange geheizt, bis sich diese Spannung nicht mehr ändert und der Leitungswiderstand der warmen Leitung $R_W$ gemessen. Es läßt sich ableiten, daß in der x-Zone eine Temperatur von

$$\vartheta_X \;=\; \frac{1}{\alpha} \cdot \frac{l}{\lambda} \cdot \left( \frac{R_W}{R_K} - 1 \right) \qquad\qquad (1)$$

vorliegt, wobei $\alpha$ der Temperaturkoeffizient des Leitermaterials ist, z.B. für Kupfer $\frac{1}{\alpha} = 256°C$. Somit ergibt sich der der jeweiligen Materialtemperatur $\vartheta_{max}$ des Isolationsmaterials und der Verlegerart angemessenen Nennstrom zu

$$I_N = I_M \cdot \cdot \sqrt{\vartheta_{max}/\vartheta_x} \cdot \qquad\qquad (2)$$

Dieser Nennstrom $I_N$ wird im intelligenten Leitungsschalter nicht flüchtig gespeichert.

Vorteilhaft ist bei dem anhand Figur 2 beschriebenen Verfahren, daß nur elektrische Messungen, aber keine weitere Temperaturmessung notwendig ist.

Bei dem beschriebenen intelligenten Leitungsschutzschalter ist weiterhin eine Selbstüberwachung möglich. Wenn davon ausgegangen wird, daß beim Konzept des intelligenten Leitungsschalters alle Schalter Daten austauschen können, kann ein übergeordneter Leitungsschutzschalter Funktionen eines nicht mehr funktionstüchtigen, untergeordneten Leitungsschutzschalters in gewissem Umfang mit wahrnehmen, indem er seine Charakteristik daran anpaßt. Letzterer Vorgang wird als sogenanntes Back-up bezeichnet.

**Patentansprüche**

1. Leitungsschutzschalter zum Überlastschutz von Leitungen in Abhängigkeit von vorgegebenen Schaltkriterien, wobei zum Einstellen der Schaltkriterien eine informationsverarbeitende Einheit (10), insbesondere ein Mikroprozessor (μP) oder ein Mikrocontroller (μC), vorhanden ist, wobei die informationsverarbeitende Einheit einen adaptiven Überlastbaustein (10) derart bildet, daß die Schaltkriterien bei eingebautem Schalter veränderbar sind, **dadurch gekennzeichnet**, daß die Schaltkriterien wenigstens das Isolationsmaterial sowie die Verlegeart einerseits und die Raumtemperatur andererseits berücksichtigen.

2. Leitungsschutzschalter nach Anspruch 1, **dadurch gekennzeichnet** daß der Überlastbaustein (10) die Schaltcharakteristik auf den Verbraucher, das Leiter- und/oder Isolationsmaterial sowie die Wärmeabfuhr einstellt, wodurch das Betriebsverhalten von Umgebungstemperatur und mögliche Nachbar-Leitungsschutzschalter unabhängig wird.

3. Leitungsschutzschalter nach Anspruch 1, **dadurch gekennzeichnet**, daß der Überlastbaustein (10) eine kontinuierliche Anpassung an den Verbraucher ermöglicht.

4. Leitungsschutzschalter nach Anspruch 1, **dadurch gekennzeichnet**, daß Mittel für eine kontinuierliche Anpassung, wie insbesondere Einmessen, an die Leitung des gesamten Netzes vorhanden sind.

5. Leitungsschutzschalter nach Anspruch 1, **dadurch gekennzeichnet**, daß Mittel zur Selbstüberwachung vorhanden sind.

6. Leitungsschutzschalter nach Anspruch 5, **dadurch gekennzeichnet**, daß die Selbstüberwachung durch ein regelmäßiges 'Back-up' erfolgt.

**Claims**

1. Line circuit-breaker for overload protection of lines as a function of predetermined switching criteria, wherein in order to adjust the switching criteria, there is an information-processing unit (10), in particular a microprocessor (μP) or a microcontroller (μC), with the information-processing unit forming an adaptive overload module (10), in such a way that the switching criteria can be altered in the case of an installed switch, characterised in that the switching criteria take into account at least the insulation material and the installation type on the one hand and the ambient temperature on the other.

2. Line circuit-breaker according to claim 1, characterised in that the overload module (10) adjusts the switching characteristic to the load, the conductor material and/or insulation material and the heat removal, as a result of which the operational performance is independent of ambient temperature and possible neighbouring line circuit-breakers.

3. Line circuit-breaker according to claim 1, characterised in that the overload module (10) renders possible a continuous adaptation to the load.

4. Line circuit-breaker according to claim 1, characterised in that there are means for a continuous adaptation, such as, in particular, calibration, to the line of the whole network.

5. Line circuit-breaker according to claim 1, characterised in that there are means for self-monitoring.

6. Line circuit-breaker according to claim 5, characterised in that the self-monitoring takes place by a regular "back-up".

**Revendications**

1. Disjoncteur de ligne pour protéger contre toute surcharge des lignes en fonction de critères de commutation prescrits, une unité de traitement d'informations (10), notamment un microprocesseur (μP) ou un microcontrôleur (μC), étant prévue pour le réglage des critères de commutation, l'unité de traitement d'informations formant un module de surcharge adaptatif (10) de telle sorte que les critères de commutation sont modifiables alors que le disjoncteur est installé, caractérisé par le fait que les critères de commutation prennent en compte au moins le matériau isolant et le type de pose d'une part ainsi que la température ambiante d'autre part.

2. Disjoncteur de ligne selon la revendication 1, caractérisé par le fait que le module de surcharge (10) règle la caractéristique de commutation sur le consommateur, sur le matériau conducteur et/ou sur le matériau isolant ainsi que sur la dissipation de chaleur, le comportement lors du fonctionnement devenant ainsi indépendant de la température ambiante et d'éventuels disjoncteurs de ligne voisins.

3. Disjoncteur de ligne selon la revendication 1, caractérisé par le fait que le module de surcharge (10) permet une adaptation continue au consommateur.

4. Disjoncteur de ligne selon la revendication 1, caractérisé par le fait qu'il est prévu des moyens, notamment un étalonnage, pour une adaptation continue à la ligne de tout le réseau.

5. Disjoncteur de ligne selon la revendication 1, caractérisé par le fait qu'il est prévu des moyens pour l'autocontrôle.

6. Disjoncteur de ligne selon la revendication 5, caractérisé par le fait que l'autocontrôle s'effectue au moyen d'un "back-up" régulier.

μP

10

1

2    3

5

6

8

FIG 1

FIG 2